# FASCICULE DE BREVET EUROPEEN

(11) **EP 3 562 656 B1**
(45) Date de publication et mention de la délivrance du brevet: **14.12.2022**
(21) Numéro de dépôt: 17825587.3
(22) Date de dépôt: 15.12.2017
(51) Int. Cl.: B29D 23/00, B29C 33/00, B62D 29/04, B29C 70/86, B29C 70/46, B29D 22/00, B29C 70/54, B29L 31/30

(54) **PIÈCES STRUCTURELLES COMPRENANT UN INSERT SURMOULÉ**
STRUKTURELLE TEILE MIT EINEM UMSPRITZTEN EINSATZ
STRUCTURAL PARTS COMPRISING AN OVERMOULDED INSERT

(30) Priorité: 29.12.2016 FR 1663521
(43) Date de publication de la demande: 06.11.2019
(73) Titulaire: Compagnie Plastic Omnium, 69007 Lyon (FR)
(72) Inventeur: PARRA, Stéphane, 69120 Vaulx-en-Velin (FR)
(74) Mandataire: LLR
(86) Numéro de dépôt international: PCT/FR2017/053607
(87) Numéro de publication internationale: WO 2018/122489

(56) Documents cités:
- DE-A1-102011 109 478
- DE-A1-102012 013 881
- DE-A1-102013 020 871
- US-A1- 2003 129 061

## Description

La présente invention concerne le domaine technique des véhicules automobiles, et notamment le domaine des pièces structurelles en plastique des véhicules automobiles. De telles pièces peuvent généralement prendre des formes particulières et/ou sont renforcées avec des inserts permettant d'accroitre leurs propriétés mécaniques, telles qu'une raideur, une rigidité ou de l'inertie sous forme de cavité creuse, nécessaires pour assurer leur(s) fonction(s) finale(s).

Dans l'état de la technique, comme les documents DE102013020871A1 et US2003/129061A1, l'utilisation d'inserts en mousse est connue pour former des corps creux dans des pièces structurelles en matière composite thermodurcissable ou thermoplastique dans le but d'obtenir les propriétés mécaniques mentionnées.

Un inconvénient de cette solution est que l'insert ainsi rempli ne peut plus être utilisé et qu'il ajoute un poids non négligeable à la pièce, et donc par extension au véhicule. Un autre inconvénient est que le corps creux ainsi obtenu est un volume perdu, inutilisable pour assurer d'autres fonctions.

Une autre solution connue de l'état de la technique consiste à former un corps creux à partir de deux pièces collées et rivetées l'une à l'autre. Une telle solution implique la formation des deux pièces, puis leur collage l'une à l'autre. Ces dernières sont ensuite percées dans le but d'obtenir les trous pour les rivets. Enfin, une étape d'introduction des rivets et de rivetage est opérée.

Une telle solution est désavantageuse, car elle implique la fabrication de deux pièces et des étapes qui nécessite de la précision (dépôt de la colle, perçage des rivets). De plus, les étapes mises en œuvre allongent et complexifient le processus de fabrication de la pièce finale.

L'invention a pour but de remédier à ces inconvénients en fournissant un procédé de fabrication d'une pièce structurelle selon la revendication 1. Non couvert par le texte des revendications est une pièce structurelle d'un véhicule automobile, réalisée en matière composite incorporant des fibres de renfort, et comprenant une partie en forme de corps creux, caractérisée en ce que la partie en forme de corps creux est délimitée par une enveloppe interne ayant un volume intérieur, surmoulée par une couche de la matière composite et en ce que le volume intérieur de l'enveloppe interne est intégralement occupé par un fluide.

Un avantage à l'utilisation d'un insert comprenant un volume interne rempli de fluide, est l'état pressurisé de ce fluide qui permet à l'insert de résister sans s'effondrer à la pression mise en œuvre lors de l'étape de surmoulage réalisée au sein du moule. En outre, le corps creux ainsi obtenu est léger, ce qui est un avantage dans le domaine de l'automobile où le gain de poids est une préoccupation permanente. De plus, une fois la pièce formée, le corps creux peut être percé et servir de goulotte pour des passages de fils ou de canal d'air. Le perçage permet en outre d'équilibrer la pression à laquelle est soumis le fluide occupant le volume intérieur de l'enveloppe interne et la pression à l'extérieur de la pièce structurelle. Un tel équilibrage des pressions entre l'extérieur et le volume intérieur de l'enveloppe interne permet de supprimer tout risque d'explosion qui peut intervenir, par exemple, si une pression trop importante est appliquée, après formation de la pièce, sur la partie en forme de corps creux de la pièce.

Selon un mode de réalisation particulier de la pièce structurelle, non couvert par le texte des revendications, la matière composite est une matière composite thermodurcissable, de préférence du SMC - acronyme de "Sheet Molding Compound".

Ce matériau présente l'avantage d'une production et d'une reproductibilité des pièces très élevées lors de son moulage par rapport à d'autres matériaux de moulage. De plus, il permet la fabrication de pièces légères, flexibles et résistantes, et ce à moindre coût.

Selon une alternative de ce mode de réalisation de la pièce structurelle, non couvert par le texte des revendications, la matière composite est une matière composite thermoplastique, de préférence du PA - acronyme de "Polyamide" - ou du PP - acronyme de "Polypropylène".

Ces matériaux présentent eux aussi des caractéristiques de production et de reproductibilité des pièces très élevées.

Selon un mode de réalisation particulier de la pièce structurelle, non couvert par le texte des revendications, la matière composite (qu'elle soit de nature thermodurcissable ou thermoplastique) contient des fibres de renfort, telles que des fibres de carbone, des fibres de verre.

Ainsi, les pièces structurelles obtenues à partir d'une telle matière présentent une résistance accrue, tout en restant légères.

Selon un mode de réalisation particulier de la pièce structurelle, non couvert par le texte des revendications, les fibres de renfort sont des fibres unidirectionnelles, des fibres multidirectionnelles ou une combinaison de ces deux types de fibres.

Ainsi, la pièce structurelle peut aussi bien supporter des sollicitions axiales fortes (pour les fibres unidirectionnelles) que des sollicitations en torsion grâce à l'ajout d'autres fibres disposées selon des axes sécants. Il est ainsi possible de choisir le type de fibres de renfort en fonction de la pièce structurelle et des contraintes qu'elle subira une fois disposée dans le véhicule. Un tel choix est donc opéré en fonction de la tenue mécanique recherchée pour la pièce structurelle et de la nature de la matière composite utilisée pour le surmoulage.

Selon un mode de réalisation particulier de la pièce structurelle, non couvert par le texte des revendications, les fibres unidirectionnelles sont tressées.

Selon un mode de réalisation particulier de la pièce structurelle, non couvert par le texte des revendications, les fibres unidirectionnelles sont enroulées, radialement par exemple, autour de l'enveloppe interne, par rapport à une direction longitudinale de l'enveloppe interne.

Selon un mode de réalisation particulier de la pièce structurelle, non couvert par le texte des revendications, l'enveloppe interne est formée par les fibres de renforts pourvues d'un un revêtement liant et/ou une combinaison de fibres liantes assurant l'étanchéité du volume intérieur (4) occupé par le fluide.

Selon un mode de réalisation particulier de la pièce structurelle, non couvert par le texte des revendications, l'enveloppe interne a une section circulaire.

Selon un mode de réalisation particulier de la pièce structurelle, non couvert par le texte des revendications, le fluide est un liquide, un gaz ou un mélange de gaz, de liquide ou des deux.

Ainsi, il est possible d'adapter la composition du fluide contenu dans le volume intérieur de l'insert afin d'obtenir une composition de fluide stable pour la pression appliquée à l'intérieur de l'insert.

Un autre objet de l'invention est une utilisation d'une pièce structurelle selon l'invention en tant que pièce choisie parmi la liste suivante : plancher ; hayon ; pilier de pare-brise, également désigné A-pilar ; pilier milieu, situé entre les portières avant et arrière, également désigné B-pilar ; pilier arrière, également C-pilar ; poutre choc ; renfort de portière ; insert de renfort d'une poutre de chocs.

Un autre objet de l'invention est un procédé de fabrication d'une pièce structurelle d'un véhicule automobile en matière composite, le procédé comprenant les étapes consistant à :
- déposer dans un moule de moulage par compression, au moins une feuille de fibres de renfort imprégnées de résine thermodurcissable ou thermoplastique, ainsi qu'un insert, l'insert étant constitué d'une enveloppe étanche fermée contenant un fluide sous pression ; et
- fermer le moule en comprimant la feuille et l'insert à une pression de compression égale ou inférieure à la pression du fluide.

Selon un mode de réalisation particulier du procédé, on dépose l'insert entre deux feuilles de fibres de renfort.

Selon un mode de réalisation particulier du procédé, avant de déposer l'insert, on préforme localement l'une au moins des feuilles de fibres de renfort pour y former un logement pour l'insert.

Selon un mode de réalisation particulier du procédé, après prise de la matière composite, on perce la pièce pour équilibrer les pressions entre le volume intérieur de l'enveloppe interne et l'extérieur de la pièce. Dans la variante de mode de réalisation dans laquelle la matière composite est une matière thermodurcissable, l'étape de prise de la matière composite correspond à l'étape de polymérisation de la matière thermodurcissable.

L'invention sera mieux comprise à la lecture des figures annexées, qui sont fournies à titre d'exemples et ne présentent aucun caractère limitatif, dans lesquelles :
- la figure 1 est une coupe schématique d'une partie d'une pièce structurelle selon un premier mode de réalisation non couvert par le texte des revendications,
- la figure 2 est une coupe schématique d'une partie d'une pièce structurelle selon une variante du premier mode de réalisation non couvert par le texte des revendications,
- la figure 3 est une coupe schématique d'une partie d'une pièce structurelle selon une seconde variante du premier mode de réalisation non couvert par le texte des revendications,
- les figures 4A à 4F sont des représentations schématiques des différentes étapes du procédé de fabrication d'une pièce structurelle de l'invention,
- la figure 5 est une représentation en perspective d'une pièce structurelle selon une autre variante du premier mode de réalisation non couvert par le texte des revendications,
- la figure 6 est une représentation en perspective d'un plancher non couvert par le texte des revendications.

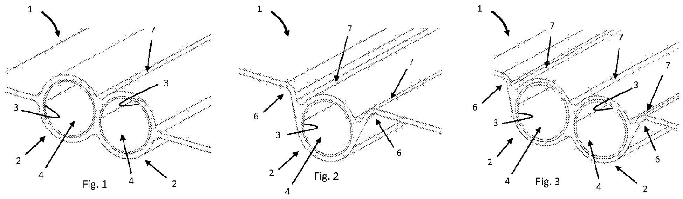

On va décrire des exemples particuliers de réalisation à l'aide des figures 1 à 6, dans lesquels la pièce structurelle 1 est réalisée à partir de matière composite thermodurcissable, dont une couche de matière thermodurcissable est surmoulée autour d'au moins un insert 2 formant une partie en forme de corps creux. Cette partie en forme de corps creux est délimitée par une enveloppe interne 3 entourant un volume intérieur 4 intégralement occupé par un fluide sous pression. L'invention n'est pas limitée à ce type de réalisation, la pièce structurelle 1 peut par exemple être réalisée à partir de de matière composite thermoplastique, et le fluide occupant intégralement le volume peut être un liquide dit incompressible. La partie en forme de corps creux peut également être formée par les fibres de renfort liées les unes aux autres, par l'intermédiaire de fibres liantes ou d'un revêtement liant appliqué aux fibres de renfort. Dans un tel cas, l'utilisation de l'insert 2 n'est plus nécessaire.

L'application d'une couche d'épaisseur constante lors de la fabrication de la pièce structurelle 1 entraine, à proximité de l'insert 2, la formation de gouttières 7 issues du phénomène de rétractation de la matière lors de son durcissement. Par conséquent, la pièce structurelle 1 finale possède une couche de matière thermodurcissable d'épaisseur constante, ce qui permet d'éviter l'apparition de contraintes internes à la pièce, dues à des variations d'épaisseur de la matière.

A la figure 1, la partie de la pièce structurelle 1 comprend deux inserts 2 de forme cylindrique. Ces deux inserts 2 sont disposés parallèles à proximité l'un de l'autre et ne sont séparés que par la couche de matière thermodurcissable surmoulée. Du fait des inserts 2, la pièce structurelle 1 présente autour de l'enveloppe interne 3 de chacun des inserts 2, une forme particulière créant de l'inertie, ce qui permet de renforcer la résistance de la pièce structurelle 1, à cet endroit précis et également aux zones environnantes de la pièce structurelle 1.

La partie de la pièce structurelle 1 de la figure 2 comprend un insert 2 unique surmoulé par la couche de matière thermodurcissable. Dans cette variante, la pièce structurelle 1 est surmoulée de manière à former deux plis 6, situés de part et d'autre de l'insert 2 de forme cylindrique, et qui permettent de renforcer la raideur de la pièce structurelle 1 dans la zone dans laquelle est situé l'insert 2. De plus, l'insert 2 est disposé de manière à ne pas former une excroissance sur l'un des faces de la pièce structurelle 1. Par conséquent, la pièce structurelle 1 présente une face plane et peut donc être utilisée plus facilement.

La partie de la pièce structurelle 1 de la figure 3 comprend deux inserts 2 similaires à ceux de la pièce structurelle 1 de la figure 1, ainsi que deux plis 6 similaires à ceux de la pièce structurelle 1 de la figure 2. Une telle pièce structurelle 1 présente, par conséquent, des propriétés de raideur et de résistance en cette zone encore accrues.

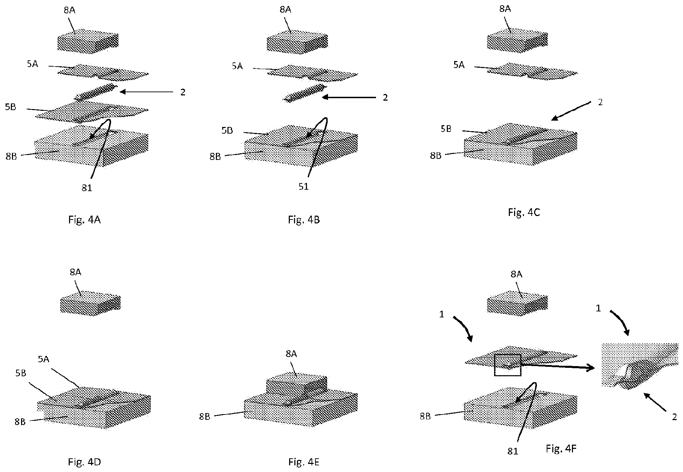

Les figures 4A à 4F illustrent différentes stades de la fabrication d'une pièce structurelle 1, par un procédé de moulage par compression. En figure 4A, on observe en vue éclatée, un insert 2 rempli d'un fluide sous pression, une feuille de matière thermodurcissable inférieure 5B, une feuille de matière thermodurcissable supérieure 5A, toutes deux préformées et un moule formé par une demi-coquille inférieure 8B et une demi-coquille supérieure 8A. La feuille de matière thermodurcissable supérieure 5A et la demi-coquille supérieure 8A sont ici représentées en coupe alors qu'elles recouvrent intégralement respectivement la feuille de matière thermodurcissable inférieure 5B et la demi-coquille 8B.

A la figure 4B, la feuille de matière de matière thermodurcissable inférieure 5A est disposée sur la demi-coquille inférieure 8B et épouse son empreinte 81, formant ainsi un logement 51, dans lequel l'insert 2 est ensuite introduit, comme représenté à la figure 4C.

Par la suite, la feuille de matière thermodurcissable supérieure 5B préformée est à son tour disposée sur la demi-coquille inférieure 8B, comme illustré à la figure 4D, et recouvre partiellement l'insert 2, ainsi que la feuille de matière thermodurcissable inférieure 5B. Dans une variante de cette étape non représentée, la feuille de matière thermodurcissable supérieure 5A peut recouvrir toute la surface de la demi-coquille inférieure 8B, avant l'étape de compression.

En figure 4E, on observe l'étape de compression qui se traduit par le déplacement de la demi-coquille supérieure 8A vers la demi-coquille inférieure 8B. Cette compression augmente la pression au sein du moule, la pression pouvant généralement attendre 80 bars. Une telle pression engendre la fluidification de la matière. Dès lors, cette matière fluidifiée se répartit sur toute la surface disponible au sein du moule. Cette répartition a pour résultat la formation de la couche de matière thermodurcissable surmoulant l'intégralité de l'insert 2, comme cela est illustré en figure 4F.

Le volume intérieur 4 de l'insert 2, dans lequel le fluide est enfermé, présente également une forte pression permettant à l'insert 2 de résister à l'étape de compression sans collapser. Par conséquent, la couche de matière thermodurcissable épouse la forme initiale de l'insert 2, permettant ainsi d'obtenir un corps creux dont les dimensions sont contrôlées. La pièce structurelle 1 présente donc, après l'ouverture du moule et prise de la matière, des propriétés mécaniques de résistance et de raideur accrues, tout en restant légère.

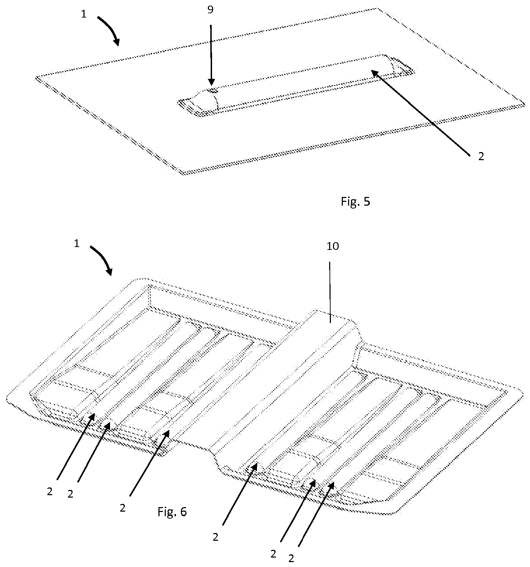

Dans une étape optionnelle non représentée, l'insert 2 peut également être percé après l'étape de compression, afin d'obtenir une pièce structurelle 1 similaire à celle illustrée sur la figure 5, qui présente un orifice 9. De ce fait, le fluide contenu dans l'insert 2 peut s'échapper et un équilibrage des pressions s'opère entre la pression du volume intérieur 4 de l'enveloppe interne 3 et la pression à l'extérieur de la pièce structurelle 1. Dès lors, la sécurité liée à l'utilisation d'une telle pièce structurelle 1 est améliorée. En effet, les risques d'explosion ou éclatement de l'insert 2, causés par exemple par des différentielles de pression ou de température entre le volume intérieur 4 de l'insert 2 et l'extérieur de la pièce structurelle 1, sont réduits, voire même supprimés grâce à l'équilibrage des pressions. Le perçage de l'insert 2 peut également être double, ce dernier pouvant, dès lors, être utilisé comme gouttière pour le passage de fils ou de canaux d'aération par exemple.

La figure 6 représente un plancher 1 qui comprend six inserts 2. Quatre de ces inserts 2 sont situées à proximité deux à deux, de manière similaire aux inserts 2 de la pièce structurelle 1 sur la figure 1. Les deux autres inserts 2 sont isolés des quatre premiers inserts 2 et sont situés de part et d'autre de la partie centrale 10 du plancher 1, afin de renforcer la raideur de cette zone spécifique du plancher 1 qui risque d'être plus sollicitée que les autres zones du plancher 1.

## Revendications

1. Procédé de fabrication d'une pièce structurelle (1) d'un véhicule automobile en matière composite, **caractérisé en ce qu'**il comprend les étapes consistant à :
- déposer dans un moule de moulage par compression, au moins une feuille de fibres de renfort (5A, 5B) imprégnées de résine thermodurcissable ou thermoplastique, ainsi qu'un insert (2), l'insert (2) étant constitué d'une enveloppe étanche fermée contenant un fluide sous pression ; et
- fermer le moule en comprimant la feuille (5A, 5B) et l'insert (2) à une pression de compression égale ou inférieure à la pression du fluide.

2. Procédé selon la revendication 1, dans lequel on dépose l'insert (2) entre deux feuilles de fibres de renfort (5A, 5B).

3. Procédé selon l'une quelconque des revendications 1 et 2, dans lequel avant de déposer l'insert (2), on préforme localement l'une au moins des feuilles de fibres de renfort (5A, 5B) pour y former un logement pour l'insert (2).

4. Procédé selon l'une quelconque des revendications 1, 2 et 3, dans lequel après prise de la matière composite, on perce la pièce structurelle (1) pour équilibrer les pressions entre le volume intérieur (4) de l'enveloppe interne (3) et l'extérieur de la pièce structurelle (1).

## Patentansprüche

1. Verfahren zur Herstellung eines Strukturteils (1) eines Kraftfahrzeugs aus Verbundmaterial, **dadurch gekennzeichnet, dass** es die folgenden Schritte umfasst:
- Ablegen in einer Form zu den Formpressen mindestens eines Blattes aus Verstärkungsfaserfolien (5A, 5B), die mit einem wärmehärtenden oder thermoplastischen Harz imprägniert sind, sowie eines Einsatzes (2), wobei der Einsatz (2) aus einer geschlossenen, dichten Hülle besteht, die ein unter Druck stehendes Fluid enthält; und
- Schließen der Form durch Zusammendrücken der Verstärkungsfaserfolie (5A, 5B) und des Einsatzes (2) mit einem Kompressionsdruck, der gleich oder niedriger als der Druck des Fluids ist.

2. Verfahren nach Anspruch 1, wobei der Einsatz (2) zwischen zwei Blättern aus Verstärkungsfaserfolien (5A, 5B) abgelegt wird.

3. Verfahren nach einem der Ansprüche 1 und 2, wobei vor dem Ablegen des Einsatzes (2) mindestens eine der Verstärkungsfaserfolien (5A, 5B) lokal vorgeformt wird, um darin eine Aufnahme für den Einsatz (2) zu bilden.

4. Verfahren nach einem der Ansprüche 1, 2 oder 3, wobei nach dem Abbinden des Verbundmaterials das Strukturteil (1) durchbohrt wird, um die Drücke zwischen dem Innenvolumen (4) der Innenhülle (3) und der Außenseite des Strukturteils (1) auszugleichen.

## Claims

1. Method of manufacturing a structural part (1) of a motor vehicle made of composite material, **characterized in that** it comprises the steps of :
- placing in a compression molding mold, at least one sheet of reinforcement fibers (5A, 5B) impregnated with thermosetting or thermoplastic resin, as well as an insert (2), the insert (2) being composed of a closed sealed envelope containing a pressurized fluid; and
- closing the mold by compressing the sheet (5A, 5B) and the insert (2) at a compression pressure equal to or less than the pressure of the fluid.

2. A method according to claim 1, wherein is the insert (2) is placed between two sheets of reinforcement fibers (5A, 5B).

3. A method according to any one of claims 1 and 2, wherein before placing the insert (2), at least one of the sheets of reinforcement fibers (5A, 5B) is locally preformed to form a housing for the insert (2) therein.

4. Amethod according to any one of claims 1, 2 and 3, wherein after taking the composite material, the structural part (1) is drilled to balance the pressures between the inner volume (4) of the inner envelope (3) and the outside of the structural part (1).
